# EUROPÄISCHE PATENTSCHRIFT

(11) **EP 2 925 149 B1**
(45) Veröffentlichungstag und Bekanntmachung des Hinweises auf die Patenterteilung: **12.07.2017**
(21) Anmeldenummer: 14815604.5
(22) Anmeldetag: 05.12.2014
(51) Int. Cl.: A21C 11/08

(54) **TEIGFORMMASCHINE UND VERFAHREN ZUR HERSTELLUNG EINES GEBÄCKSTÜCKS**
DOUGH-FORMING MACHINE AND METHOD FOR PRODUCING A BAKED ITEM
MACHINE DE FAÇONNAGE DE PÂTE ET PROCÉDÉ DE FABRICATION D'UNE PÂTISSERIE

(30) Priorität: 21.02.2014 DE 102014102289
(43) Veröffentlichungstag der Anmeldung: 07.10.2015
(73) Patentinhaber: OKA-Spezialmaschinenfabrik GmbH & Co. KG, 64297 Darmstadt (DE)
(72) Erfinder: DREES, Matthias, 64297 Darmstadt (DE)
(74) Vertreter: Katscher Habermann Patentanwälte
(86) Internationale Anmeldenummer: PCT/EP2014/076729
(87) Internationale Veröffentlichungsnummer: WO 2015/124229

(56) Entgegenhaltungen:
- DE-B- 1 155 403
- DE-C- 527 024
- FR-A- 936 838
- US-A- 3 602 155
- US-A- 3 689 280
- US-A1- 2010 196 564

## Beschreibung

Die Erfindung betrifft eine Teigformmaschine mit einer ersten Teigzufuhrvorrichtung und mit einer Motivwalze zur Herstellung von Gebäckstücken, wobei die Motivwalze einen zylinderförmigen Grundkörper und mindestens eine an einer Mantelfläche des Grundkörpers ausgebildete Vertiefung zur Aufnahme von Gebäckteig aufweist, wobei die Vertiefung durch ein Motivbodenelement und eine Seitenwandung begrenzt ist, wobei das Motivbodenelement in einer bezüglich des Grundkörpers der Motivwalze radialen Richtung von einer ersten Volumenposition in eine zweite Volumenposition verlagerbar in der Vertiefung angeordnet ist, so dass ein Volumen der Vertiefung verändert werden kann, wobei mit der ersten Teigzufuhrvorrichtung ein erster Teig in die Vertiefung eingebracht werden kann.

Teigformmaschinen mit solchen Motivwalzen werden zum Formen von Gebäckteiglingen eingesetzt. Zu diesem Zweck wird Teig über eine geeignete Zufuhrvorrichtung auf die Mantelfläche der sich drehenden Motivwalze aufgebracht, üblicherweise mit Hilfe einer sich gegen die Motivwalze abstützenden Speisewalze in die auf der Mantelfläche angeordneten Vertiefungen eingedrückt und anschließend überschüssiger, auf der Mantelfläche der Motivwalze verbliebener Teig mit Hilfe eines an der Mantelfläche anliegenden Abstreifers oder Messers von der Mantelfläche entfernt. Anschließend werden die in den Vertiefungen ausgeformten Gebäckteiglinge auf ein Austragsband aufgebracht, das an der Motivwalze anliegt und gegen das sich die Motivwalze abrollt. Mit Hilfe des Austragsbands werden die Gebäckteiglinge aus der Motivwalze gezogen und schließlich zum Backen in einen entsprechenden Backofen eingebracht.

Aus dem Stand der Technik sind auch Teigformmaschinen mit Motivwalzen bekannt, die in der radialen Richtung verlagerbare Motivbodenelemente aufweisen. Beispielsweise können durch die verlagerbaren Motivbodenelemente die in den Vertiefungen ausgeformten Gebäckteiglinge einfacher auf das Austragsband aufgebracht werden. Solche Teigformmaschinen werden in den Druckschriften DE 527 024 C, US 3 602 155 A und FR 936 838 A beschrieben.

Zudem ist aus der Druckschrift DE 1 155 403 B eine Vorrichtung zum Herstellen von Formgebäck aus zwei oder mehreren Teigsorten bekannt. Die Vorrichtung weist eine Teigformmaschine auf, mit der Gebäckteiglinge hergestellt und auf ein Austragsband aufgebracht werden. Diese Gebäckteiglinge werden anschließend in eine Schabloniereinrichtung eingebracht, in der eine weitere Masse auf den Gebäckteigling aufgebracht wird.

Nachteilig an den bekannten Teigformmaschinen ist, dass mit Hilfe der Teigformmaschinen lediglich aus einer Teigsorte bestehende Gebäckteiglinge hergestellt werden können, bevor die Gebäckteiglinge auf das Austragsband aufgebracht werden..

Als Aufgabe der Erfindung wird es daher angesehen, die bekannten Teigformmaschinen so weiterzuentwickeln, dass sie zur Herstellung von Gebäckteiglingen aus zwei Teigsorten geeignet sind.

Diese Aufgabe wird erfindungsgemäß dadurch gelöst, dass die Teigformmaschine mindestens eine zweite Teigzuführvorrichtung aufweist, mit der mindestens ein zweiter Teig in die Vertiefung eingebracht werden kann. Durch die Verwendung einer solchen Teigformmaschine kann zunächst ein erster Teig aus einer ersten Zuführvorrichtung auf die bereits beschriebene und bekannte Weise in die Vertiefungen der Motivwalze eingebracht werden, während das Motivbodenelement in der ersten Volumenposition ist. Anschließend kann das Motivbodenelement in die zweite Volumenposition verlagert werden und sodann mit einer zweiten Zuführvorrichtung ein zweiter Teig wiederum auf die bereits bekannte Weise auf die Motivwalze aufgebracht und in die Vertiefungen eingebracht werden.

Durch die Verlagerung des Motivbodenelements von der ersten Volumenposition in die zweite Volumenposition wird das Volumen der Vertiefungen folglich vergrößert, nachdem der erste Teig in der ersten Volumenposition in die Vertiefungen eingebracht worden ist. Dadurch weisen die Vertiefungen in der zweiten Volumenposition ein größeres Volumen auf, als von der bereits in die Vertiefungen eingebrachten ersten Teigsorte ausgefüllt wird. Dieses zusätzliche und im Folgenden Differenzvolumen genannte freie Volumen kann daher auf die bekannte Weise mit einer zweiten Teigsorte befüllt werden.

Selbstverständlich ist es auch möglich und erfindungsgemäß vorgesehen, dass die Motivbodenelemente der Motivwalze in weitere Volumenpositionen verlagerbar sind, so dass mit Hilfe der erfindungsgemäßen Motivwalze auch vielschichtige Gebäckteiglinge aus zwei oder mehr Teigsorten hergestellt werden können.

Die erste Teigzuführvorrichtung und die zweite Teigzuführvorrichtung weisen vorteilhafterweise jeweils eine angrenzend an die Motivwalze angeordnete Zuführwalze auf. Mit Hilfe der Zuführwalzen der Teigzuführvorrichtungen wird der von den Teigzuführvorrichtungen auf die Mantelfläche der Motivwalze aufgebrachte Teig jeweils in die Vertiefungen eingedrückt. Dabei wird der erste Teig mit Hilfe der ersten Teigzuführvorrichtung in die Vertiefungen eingebracht, während die Motivbodenelemente der Vertiefungen in der ersten Volumenposition sind. In der ersten Volumenposition wird der erste Teig mit Hilfe einer ersten Zuführwalze so in die Vertiefungen eingedrückt, dass das gesamte Volumen in der ersten Volumenposition von dem ersten Teig ausgefüllt wird.

Anschließend werden die Motivbodenelemente in die zweite Volumenposition verlagert und von der zweiten Teigzuführvorrichtung der zweite Teig auf die Mantelfläche der Motivwalze aufgebracht. Eine zweite Zuführwalze drückt anschließend den zweiten Teig auf den ersten Teig in die Vertiefungen, so dass von dem zweiten Teig das bei der Verlagerung des Motivbodenelements von der ersten Volumenposition in die zweite Volumenposition entstandene Differenzvolumen von dem zweiten Teig ausgefüllt wird.

Um den ersten Teig und den zweiten Teig mit Hilfe der Teigzuführvorrichtungen einfach auf die Mantelfläche der Motivwalze aufbringen zu können, ist erfindungsgemäß vorgesehen, dass die erste Teigzuführvorrichtung und die zweite Teigzuführvorrichtung jeweils einen Teigzuführbehälter aufweisen.

Zum Entfernen auf der Mantelfläche der Motivwalze verbliebener Teigrückstände ist vorteilhafterweise vorgesehen, dass die erste Teigzuführvorrichtung und die zweite Teigzuführvorrichtung jeweils einen an der Motivwalze anliegenden Abstreifer aufweisen. Erfindungsgemäß kann es sich bei dem Abstreifer beispielsweise auch um ein geeignetes und an der Mantelfläche der Motivwalze anliegendes Messer handeln. Messer werden vor allem bei der Verarbeitung härterer Teigsorten eingesetzt, während Abstreifer bei weicheren Teigsorten verwendet werden.

Zur Verlagerung des Motivbodenelements von der ersten Volumenposition in die zweite Volumenposition und von der zweiten Volumenposition in die erste Volumenposition ist vorteilhafterweise vorgesehen, dass das Motivelement ein in der Vertiefung angeordnetes Kopfteil und einen mit dem Kopfteil in Wirkverbindung stehenden und innerhalb des Grundkörpers gelagerten Pleuel aufweist, so dass das Kopfteil durch eine Verlagerung des Pleuels verlagert werden kann.

Bei einer besonders vorteilhaften Ausgestaltung der erfindungsgemäßen Motivwalze ist vorgesehen, dass der Pleuel gegen eine innerhalb der Motivwalze bezüglich des Pleuels drehbar gelagert angeordnete Kurvenscheibe abgestützt ist und bei einer Drehung der Kurvenscheibe verlagert wird. Durch die Verwendung einer Kurvenscheibe, gegen die sich der Pleuel des Motivbodenelements abstützt kann auf besonders einfache Art und Weise die erforderliche Verlagerung des Motivbodenelements von der ersten Volumenposition in die zweite Volumenposition und von der zweiten Volumenposition zurück in die erste Volumenposition ermöglicht werden.

Zur Verlagerung des Motivbodenelements ist erfindungsgemäß vorteilhafterweise vorgesehen, dass der Pleuel in einer an der Kurvenscheibe ausgebildeten Führungsnut gelagert ist, so dass eine radiale Verlagerung der Pleuel durch eine Kurvenbahn der Führungsnut der Kurvenscheibe vorgegeben werden kann. Auf diese Weise kann das Motivbodenelement einfach von der ersten Volumenposition in die zweite Volumenposition und zurück verlagert werden.

Um das Motivbodenelement einfach aus der ersten Volumenposition in die zweite Volumenposition verlagern zu können ist erfindungsgemäß auch vorgesehen, dass das Motivbodenelement über eine Rückstellfeder mit dem Grundkörper in Wirkverbindung steht, wobei die Rückstellfeder eine in Richtung der zweiten Volumenposition wirkende Federkraft auf das Motivbodenelement ausübt.

Es ist aber auch möglich und erfindungsgemäß vorgesehen, für die erforderliche Verlagerung des Motivbodenelements den Pleuel beispielsweise gegen einen innerhalb des Grundkörper gelagerten Exzenter abzustützen, wobei zur Verlagerung des Motivbodenelements von der zweiten Volumenposition in die erste Volumenposition ebenfalls eine geeignete Rückstellfeder vorgesehen werden kann. Des Weiteren ist es erfindungsgemäß auch möglich, die Motivbodenelemente über geeignete und innerhalb des Grundkörpers angeordnete elektromagnetische Aktuatoren verlagern zu können. Anstelle elektromagnetisch betriebener Stellantriebe können erfindungsgemäß aber auch elektromotorisch, pneumatisch oder hydraulisch angetriebene Verstellvorrichtungen zur Verlagerung der Motivbodenelemente vorgesehen sein.

Die Erfindung betrifft auch ein Verfahren zur Herstellung eines Gebäckstücks aus mehreren Teigsorten mit einer wie vorangehend beschriebenen Teigformmaschine.

Erfindungsgemäß ist bei dem Verfahren vorgesehen, dass in einem ersten Schritt das Motivbodenelement in die erste Volumenposition verlagert wird, dass in einem zweiten Schritt erster Teig mit Hilfe der ersten Teigzuführvorrichtung in die Vertiefung eingebracht wird, dass in einem dritten Schritt das Motivbodenelement in die zweite Volumenposition verlagert wird, wobei das Volumen der Vertiefung in der zweiten Position größer ist als das Volumen der Vertiefung in der ersten Volumenposition, dass in einem vierten Schritte zweiter Teig auf den ersten Teig mit Hilfe der zweiten Teigzuführvorrichtung in die Vertiefung eingebracht wird, dass in einem nachfolgenden Entnahmeschritt ein in der Vertiefung durch das Einbringen des Teigs angeordneter Gebäckrohling aus der Vertiefung entnommen und dass in einem nachfolgenden Backschritt der Gebäckteigling gebacken wird.

Bei einer besonders vorteilhaften Ausgestaltung des erfindungsgemäßen Verfahrens ist vorgesehen, dass der dritte Schritt und der vierte Schritt mehrfach durchgeführt werden, wobei das Motivbodenelement jeweils in eine weitere Volumenposition verlagert und das Volumen der Vertiefung jeweils vergrößert wird und wobei jeweils ein weiterer Teig jeweils mit Hilfe einer weiteren Teigzuführvorrichtung in die Vertiefung eingebracht wird. Auf diese Weise können einfach vielschichtige Gebäckstücke hergestellt werden.

Weitere vorteilhafte Ausgestaltungen der Erfindung werden anhand von in der Zeichnung dargestellten Ausführungsbeispielen näher erläutert.

Es zeigt:
Fig. 1 eine schematisch dargestellte Schnittansicht einer Motivwalze für eine Teigformmaschine mit verlagerbaren Motivbodenelementen,
Fig. 2 eine schematisch dargestellte Schnittansicht einer Teigformmaschine mit zwei Teigzuführvorrichtungen und einer Motivwalze mit verlagerbaren Motivbodenelementen,
Fig. 3 ein schematisch dargestelltes Ablaufdiagramm eines Verfahrens zur Herstellung mehrschichtiger Gebäckstücke, und
Fig. 4 eine schematisch dargestellte Schnittansicht einer abweichend ausgestalteten Motivwalze.

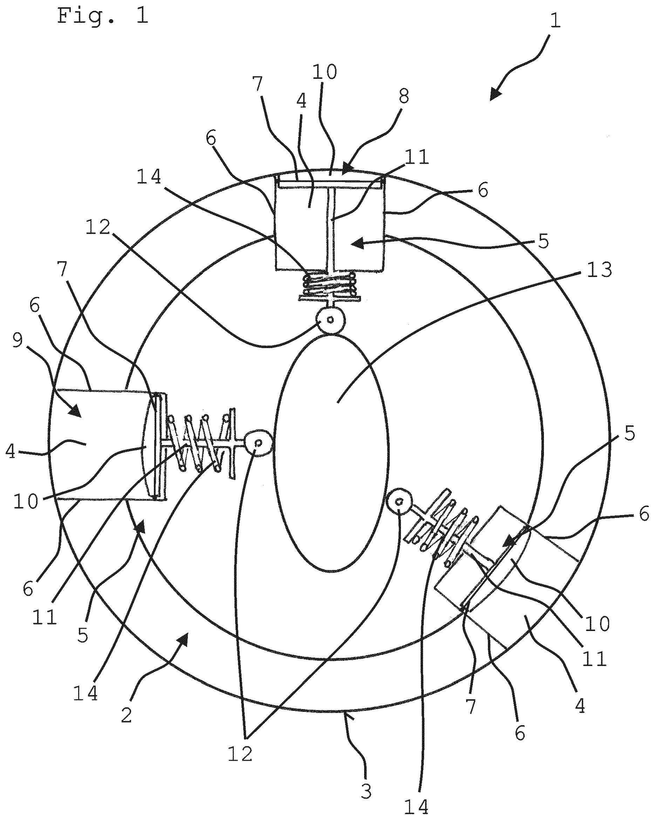

Fig. 1 zeigt eine schematisch dargestellte Motivwalze 1 zur Herstellung von Gebäckstücken in einer nicht dargestellten Teigformmaschine mit einer ersten Teigzufuhrvorrichtung und einer zweiten Teigzufuhrvorrichtung. Die Motivwalze 1 weist einen zylinderförmigen Grundkörper 2 und mehrere an einer Mantelfläche 3 des Grundkörpers 2 ausgebildete Vertiefungen 4 zur Aufnahme von Gebäckteig auf. Die Vertiefungen 4 werden durch Motivbodenelemente 5 und Seitenwände 6 begrenzt, wobei die Motivbodenelemente 5 an den Seitenwänden 6 anliegen und mit Hilfe von an den Motivbodenelementen 5 angeordneten Dichtungselementen 7 dichtend mit den Seitenwandungen 6 verbunden sind. Die Motivbodenelemente 5 sind in einer bezüglich des Grundkörpers 2 der Motivwalze 1 radialen Richtung aus einer ersten Volumenposition 8 in eine zweite Volumenposition 9 verlagerbar in den Vertiefungen 4 angeordnet, so dass Volumina der Vertiefungen 4 verändert werden können.

Zu diesem Zweck weisen die Motivbodenelemente 5 innerhalb der Vertiefungen 4 dichtend an den Seitenwänden 6 anliegende Kopfteile 10 auf. Zudem weisen die Motivbodenelemente 5 an den Kopfteilen 10 angeordnete Pleuel 11 auf, wobei die Pleuel 11 über Rollen 12 an einer innerhalb des Grundkörpers 2 der Motivwalze 1 bezüglich der Pleuel 11 drehbar gelagerten Kurvenscheibe 13 abgestützt sind.

Im Betrieb rotiert der Grundkörper 2 mit den Vertiefungen 4 und den innerhalb den Vertiefungen 4 angeordneten Motivbodenelementen 5 um die feststehende Kurvenscheibe 13 herum, wodurch die Motivbodenelemente 5 von der zweiten Volumenposition 9 in die erste Volumenposition 8 entgegen einer von Rückstellfedern 14 aufgebrachten Federkraft verlagert werden. Die Rückstellfedern 14 ermöglichen die Verlagerung der Motivbodenelemente 5 von der ersten Volumenposition 8 in die zweite Volumenposition 9.

Anstelle der Verwendung von Rückstellfedern 14 können die Pleuel 11 der Motivbodenelemente 5 auch in einer an der Kurvenscheibe 13 ausgebildeten Nut geführt werden, so dass die Motivbodenelemente 5 bei einer Drehung des Grundkörpers 2 der Motivwalze 1 um die Kurvenscheibe 13 von der ersten Volumenposition 8 in die zweite Volumenposition 9 und von der zweiten Volumenposition 9 in die erste Volumenposition 8 verlagert werden.

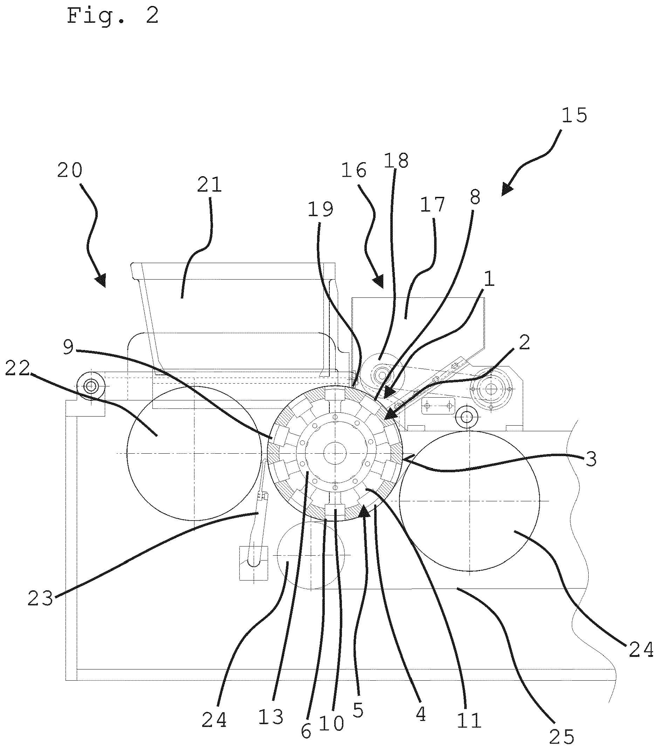

Fig. 2 zeigt schematisch eine ausschnittsweise Schnittansicht einer Teigformmaschine 15 mit einer Motivwalze 1, wobei die Motivwalze 1 mehrere innerhalb von Vertiefungen 4 verlagerbar angeordnete Motivbodenelemente 5 aufweist. Die Motivbodenelemente 5 sind über Pleuel 11 mit einer Kurvenscheibe 13 verbunden, wobei die Pleuel 11 in einer nicht dargestellten und an der Kurvenscheibe 13 ausgebildeten Nut geführt werden. In der Fig. 2 ist exemplarisch jeweils eine Vertiefung 4, ein Motivbodenelement 5, ein Pleuel 11, ein Kopfteil 10, sowie eine Seitenwand 6 mit einem Bezugszeichen gekennzeichnet.

Die Teigformmaschine 15 weist eine erste Teigzufuhrvorrichtung 16 mit einem ersten Teigzuführbehälter 17 und einer ersten Zuführwalze 18 auf. Über den ersten Teigzuführbehälter 17 wird nicht dargestellter erster Teig auf eine Mantelfläche 3 der rotierenden Motivwalze 1 aufgebracht und mit Hilfe der ersten Zuführwalze 18 an die Mantelfläche 3 und in die Vertiefungen 4 an- bzw. eingedrückt. Die erste Teigzuführvorrichtung 16 weist zudem einen Abstreifer 19 auf, der an der Mantelfläche 3 der Motivwalze 1 anliegt und überschüssigen ersten Teig von der Mantelfläche 3 abstreift.

Die Teigformmaschine 15 weist zudem eine zweite Teigzufuhrvorrichtung 20 auf, über die zweiter Teig in die Vertiefungen 4 eingebracht wird, wenn die Motivbodenelemente 5 in eine zweite Volumenposition 9 durch die Drehung der Motivbodenelemente 5 relativ zu der Kurvenscheibe 13 verlagert worden sind. Die zweite Teigzufuhrvorrichtung 20 weist einen zweiten Teigzufuhrbehälter 21 und eine zweite Zufuhrwalze 22 auf. Überschüssiger zweiter Teig wird mit Hilfe eines an der Mantelfläche 3 der Motivwalze 1 anliegenden Messers 23 entfernt.

Nachdem der zweite Teig in das durch die Verlagerung der Motivbodenelemente 5 entstandene Differenzvolumen mit Hilfe der zweiten Teigzufuhrvorrichtung 20 eingebracht worden ist, werden die in den Vertiefungen 4 angeordneten Gebäckteiglinge mit einem an der Mantelfläche 3 der Motivwalze 1 anliegenden und über Laufrollen 24 geführten Austragsband 25 in Anlage gebracht und aus den Vertiefungen 4 auf das Austragsband 25 verlagert. Anschließend werden die auf das Austragsband 25 aufgebrachten Gebäckteiglinge über das Austragsband 25 in einen nicht dargestellten Ofen verfahren.

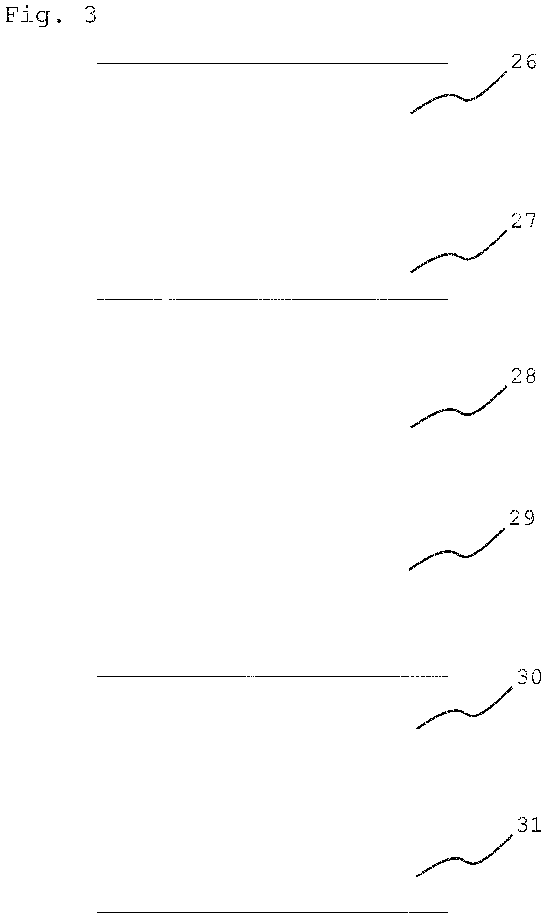

Fig. 3 zeigt einen schematisch dargestellten Verfahrensablauf zur Herstellung mehrschichtiger Gebäckstücke mit Hilfe der erfindungsgemäßen Teigformmaschine. In einem ersten Schritt 26 wird ein Motivelement einer Teigformmaschine in eine erste Volumenposition verlagert. Anschließend wird in einem zweiten Schritt 27 erster Teig mit Hilfe einer ersten Teigzufuhrvorrichtung in eine Vertiefung eingebracht und in einem darauffolgenden dritten Schritt 28 das Motivbodenelement in eine zweite Volumenposition verlagert. In der zweiten Volumenposition wird in einem vierten Schritt 29 zweiter Teig in die Vertiefungen eingebracht. Anschließend werden die in den Vertiefungen angeordneten Gebäckteiglinge in einem Entnahmeschritt 30 aus den Vertiefungen entnommen und in einem Backschritt 31 ausgebacken.

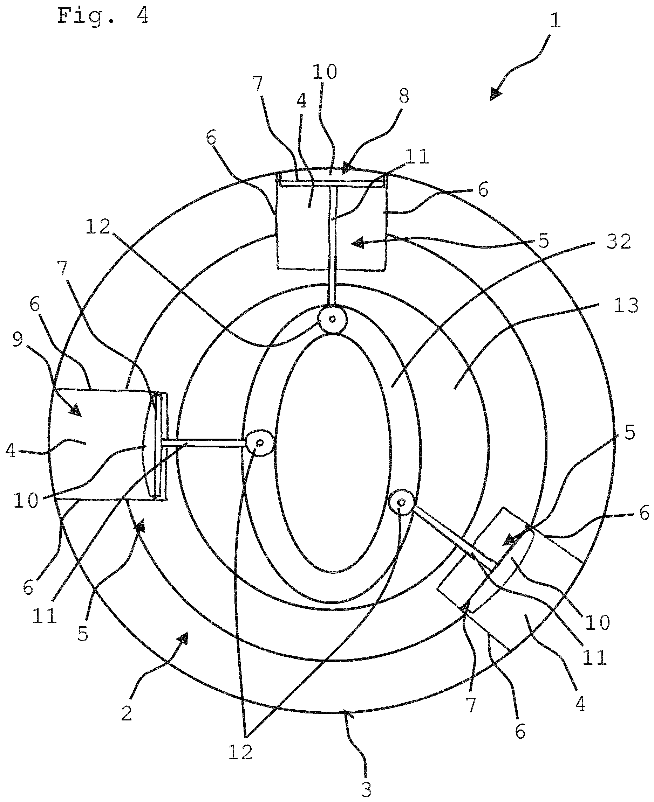

Bei der in Fig. 4 exemplarisch dargestellten Ausgestaltung der Motivwalze 1 weist die Kurvenscheibe 13 eine in Umfangsrichtung umlaufende Führungsnut 32 auf. Die Führungsnut 32 ist nicht kreisförmig ausgestaltet, sondern weist einen ovalen, bzw. elliptischen Verlauf auf. Die Rollen 12 der Pleuel 11 greifen in die Führungsnut 32 ein, so dass die Führungsnut 32 eine Zwangsführung für die Rollen 12 und damit auch für die Pleuel 11 bildet. Wenn der Grundkörper 2 der Motivwalze 1 mit den darin angeordneten Vertiefungen 4 und den darin gelagerten Kopfteilen 10 und Pleuel 11 relativ zu der Kurvenscheibe 13 verdreht wird, verändert sich der radiale Abstand des Bereichs der Führungsnut 32, in dem die Rolle 12 zwangsgeführt wird, so dass eine radiale Auslenkung des Pleuels 11 erzwungen wird, an dem die Rolle 12 gelagert ist. Auf diese Weise kann mit Hilfe der Zwangsführung durch die Führungsnut 32 eine Verlagerung der Motivbodenelemente 5 zwischen der ersten Volumenposition 8 und der zweiten Volumenposition 9 bewirkt werden. Im Gegensatz zu dem Ausführungsbeispiel gemäß Fig. 1 sind keine Federeinrichtungen bzw. Rückstellfedern 14 erforderlich.

## Patentansprüche

1. Teigformmaschine (15) mit einer ersten Teigzufuhrvorrichtung (16) und mit einer Motivwalze (1) zur Herstellung von Gebäckstücken, wobei die Motivwalze (1) einen zylinderförmigen Grundkörper (2) und mindestens eine an einer Mantelfläche (3) des Grundkörpers (2) ausgebildete Vertiefung (4) zur Aufnahme von Gebäckteig aufweist, wobei die Vertiefung (4) durch ein Motivbodenelement (5) und eine Seitenwandung (6) begrenzt ist, wobei das Motivbodenelement (5) in einer bezüglich des Grundkörpers (2) der Motivwalze (1) radialen Richtung von einer ersten Volumenposition (8) in eine zweite Volumenposition (9) verlagerbar in der Vertiefung (4) angeordnet ist, so dass ein Volumen der Vertiefung (4) verändert werden kann, wobei mit der ersten Teigzufuhrvorrichtung (16) ein erster Teig in die Vertiefung (4) eingebracht werden kann, **dadurch gekennzeichnet, dass** die Teigformmaschine (15) mindestens eine zweite Teigzufuhrvorrichtung (20) aufweist, mit der mindestens ein zweiter Teig in die Vertiefung (4) eingebracht werden kann.

2. Teigformmaschine (15) gemäß Anspruch 1, **dadurch gekennzeichnet, dass** die erste Teigzufuhrvorrichtung (16) und die zweite Teigzufuhrvorrichtung (20) jeweils eine angrenzend an die Motivwalze (1) angeordnete Zufuhrwalze (18, 22) aufweisen.

3. Teigformmaschine (15) gemäß Anspruch 1 oder Anspruch 2, **dadurch gekennzeichnet, dass** die erste Teigzufuhrvorrichtung (16) und die zweite Teigzufuhrvorrichtung (20) jeweils einen Teigzufuhrbehälter (17, 21) aufweisen.

4. Teigformmaschine (15) gemäß einem der Ansprüche 1 bis 3, **dadurch gekennzeichnet, dass** die erste Teigzufuhrvorrichtung (16) und die zweite Teigzufuhrvorrichtung (20) jeweils einen an der Motivwalze (1) anliegenden Abstreifer (19, 23) aufweisen.

5. Teigformmaschine (15) gemäß einem der Ansprüche 1 bis 4, **dadurch gekennzeichnet, dass** das Motivbodenelement (5) ein in der Vertiefung (4) angeordnetes Kopfteil (10) und einen mit dem Kopfteil (10) in Wirkverbindung stehenden und innerhalb des Grundkörpers (2) gelagerten Pleuel (11) aufweist, so dass das Kopfteil (10) durch eine Verlagerung des Pleuels (11) verlagert werden kann.

6. Teigformmaschine (15) gemäß Anspruch 5, **dadurch gekennzeichnet, dass** der Pleuel (11) gegen eine innerhalb der Motivwalze (1) bezüglich des Pleuels (11) drehbar gelagert angeordnete Kurvenscheibe (13) abgestützt ist und bei einer Drehung der Kurvenscheibe (13) verlagert wird.

7. Teigformmaschine (15) gemäß Anspruch 6, **dadurch gekennzeichnet, dass** der Pleuel (11) in einer an der Kurvenscheibe (13) ausgebildeten Führungsnut (32) gelagert ist, so dass eine radiale Verlagerung der Pleuel (11) durch eine Kurvenbahn der Führungsnut (32) der Kurvenscheibe (13) vorgegeben werden kann.

8. Teigformmaschine (15) gemäß einem der Ansprüche 1 bis 6, **dadurch gekennzeichnet, dass** das Motivbodenelement (5) über eine Rückstellfeder (14) mit dem Grundkörper (2) in Wirkverbindung steht, wobei die Rückstellfeder (14) eine in Richtung der zweiten Volumenposition (9) wirkende Federkraft auf das Motivbodenelement (5) ausübt.

9. Verfahren zur Herstellung eines Gebäckstücks aus mehreren Teigsorten mit einer Teigformmaschine (15) gemäß einem der Ansprüche 1 bis 8, wobei in einem ersten Schritt (26) das Motivbodenelement (5) in eine erste Volumenposition (8) verlagert wird, dass in einem zweiten Schritt (27) erster Teig mit Hilfe der ersten Teigzufuhrvorrichtung (16) in die Vertiefung (4) eingebracht wird, dass in einem dritten Schritt (28) das Motivbodenelement (5) in eine zweite Volumenposition (9) verlagert wird, wobei ein Volumen der Vertiefung (4) in der zweiten Volumenposition (9) größer ist als ein Volumen der Vertiefung (4) in der ersten Volumenposition (8), dass in einem vierten Schritt (29) zweiter Teig auf den ersten Teig mit Hilfe der zweiten Teigzufuhrvorrichtung (20) in die Vertiefung (4) eingebracht wird, dass in einem nachfolgenden Entnahmeschritt (30) ein in der Vertiefung (4) durch das Einbringen des Teigs angeordneter Gebäckteigling aus der Vertiefung (4) entnommen und dass in einem nachfolgenden Backschritt (31) der Gebäckteigling gebacken wird.

10. Verfahren gemäß Anspruch 9, **dadurch gekennzeichnet, dass** der dritte Schritt (28) und der vierte Schritt (29) mehrfach durchgeführt werden, wobei das Motivbodenelement (5) jeweils in eine weitere Volumenposition verlagert und das Volumen der Vertiefung (4) jeweils vergrößert wird und wobei jeweils ein weiterer Teig jeweils mit Hilfe einer weiteren Teigzufuhrvorrichtung in die Vertiefung (4) eingebracht wird.

## Claims

1. Dough forming machine (15) having a first dough-supply device (16) and a motif roll (1) for producing baked items, wherein the motif roll (1) comprises a cylindrical base body (2) and at least one depression (4) for receiving dough of baked items and formed on a shell surface (3) of the base body (2), wherein the depression (4) is delimited by a motif floor element (5) and a side wall (6), wherein the motif floor element (5) is arranged in the depression (4) to be displaceable in a radial direction with respect to the base body (2) of the motif roll (1) from a first volume position (8) to a second volume position (9), so that a volume of the depression (4) can be changed, wherein, by means of the first dough-feeding apparatus (16), a first dough can be introduced into the depression (4), **characterized in that** the dough forming machine (15) comprises at least one second dough-feeding apparatus (20), by means of which at least a second dough can be introduced into the depression (4).

2. Dough forming machine (15) according to claim 1, **characterized in that** the first dough-feeding apparatus (16) and the second dough-feeding apparatus (20) each comprise a feeding roll (18, 22) arranged adjacent to the motif roll (1).

3. Dough forming machine (15) according to claim 1 or 2, **characterized in that** the first dough-feeding apparatus (16) and the second dough-feeding apparatus (20) each comprise a dough-feeding container (17, 21).

4. Dough forming machine (15) according to one of claims 1 to 3, **characterized in that** the first dough-feeding apparatus (16) and the second dough-feeding apparatus (20) each comprise a stripping device (19, 23) resting against the motif roll (1).

5. Dough forming machine (15) according to one of claims 1 to 4, **characterized in that** the motif floor element (5) comprises a head part (10) arranged in the depression (4) and a connecting rod (11) operatively-connected to the head part (10) and supported within the base body (2), so that the head part (10) can be displaced by displacing the connecting rod (11).

6. Dough forming machine (15) according to claim 5, **characterized in that** the connecting rod (11) is supported against a cam disc (13) arranged to be rotatably supported within the motif roll (1) and is displaced upon rotation of the cam disc (13).

7. Dough forming machine (15) according to claim 6, **characterized in that** the connecting rod (11) is supported in a guide groove (32) formed on the cam disc (13) in such a way, that a radial displacement of the connecting rods (11) can be predetermined by a curved path of the guide groove (32) of the cam disc (13).

8. Dough forming machine (15) according to one of claims 1 to 6, **characterized in that** the motif floor element (5) is operatively connected to the base body (2) via a return spring (14), wherein the return spring (14) exerts a spring force to the motif floor element (5) in the direction of the second volume position (9).

9. A method for producing a baked item from multiple dough sorts with a dough-forming machine (15) according to one of claims 1 to 8, wherein in a first step (26) the motif floor element (5) is displaced into a first volume position (8) in such a way that in a second step (27) first dough is introduced into the depression (4) by means of the first dough-supply device (16), in a third step (28) the motif floor element (5) is displaced into a second volume position (9), wherein a volume of the depression (4) in the first volume position (8) is greater than a volume of the depression (4) in the second volume position (9), wherein in a fourth step (29) second dough is introduced onto the first dough in the depression(4) using the second dough supply device (20), wherein in a subsequent removing step (30), a piece of baking dough arranged in the depression (4) by introducing the dough is removed from the depression (4) and wherein in a subsequent baking step (31) the piece of baking dough is baked.

10. The method according to claim 9, **characterized in that** the third step (28) and the fourth step (29) are performed for multiple times, wherein the motif floor element (5) is in each case displaced into a further volume position and the volume of the depression (4) is in each case enlarged, and wherein in each case further dough is introduced into the depression (4) using a further dough supply device.

## Revendications

1. Machine façonneuse de pâte (15) comprenant un premier dispositif d'alimentation en pâte (16) et comprenant un rouleau à motif (1) pour la fabrication de pâtisseries, le rouleau à motif (1) présentant un corps de base (2) cylindrique et au moins un approfondissement (4) réalisé sur une surface d'enveloppe (3) du corps de base (2), destiné à réceptionner la pâte à pâtisserie, l'approfondissement (4) étant délimité par un élément de fond à motif (5) et une paroi latérale (6), l'élément de fond à motif (5) étant disposé dans l'approfondissement (4) de manière déplaçable d'une première position en volume (8) en une deuxième position en volume (9) dans une direction radiale par rapport au corps de base (2) du rouleau à motif (1), de sorte qu'un volume de l'approfondissement (4) puisse être modifié, une première pâte pouvant être placée dans l'approfondissement (4) à l'aide du premier dispositif d'alimentation en pâte (16), **caractérisée en ce que** la machine façonneuse de pâte (15) présente au moins un deuxième dispositif d'alimentation en pâte (20) à l'aide duquel au moins une deuxième pâte peut être placée dans l'approfondissement (4).

2. Machine façonneuse de pâte (15) selon la revendication 1, **caractérisée en ce que** le premier dispositif d'alimentation en pâte (16) et le deuxième dispositif d'alimentation en pâte (20) présentent respectivement un rouleau d'alimentation (18, 22) disposé de manière adjacente au rouleau à motif (1).

3. Machine façonneuse de pâte (15) selon la revendication 1 ou la revendication 2, **caractérisée en ce que** le premier dispositif d'alimentation en pâte (16) et le deuxième dispositif d'alimentation en pâte (20) présentent respectivement un récipient d'alimentation en pâte (17, 21).

4. Machine façonneuse de pâte (15) selon l'une quelconque des revendications 1 à 3, **caractérisée en ce que** le premier dispositif d'alimentation en pâte (16) et le deuxième dispositif d'alimentation en pâte (20) présentent respectivement un racleur (19, 23) adjacent au rouleau à motif (1).

5. Machine façonneuse de pâte (15) selon l'une quelconque des revendications 1 à 4, **caractérisée en ce que** l'élément de fond à motif (5) présente une partie de tête (10) disposée dans l'approfondissement (4) et une bielle (11) en liaison active avec la partie de tête (10) et logée à l'intérieur du corps de base (2), de sorte que la partie de tête (10) puisse être déplacée par un déplacement de la bielle (11).

6. Machine façonneuse de pâte (15) selon la revendication 5, **caractérisée en ce que** la bielle (11) est soutenue contre un disque de came (13) disposé à l'intérieur du rouleau à motif (1) de manière rotative par rapport à la bielle (11) et **en ce qu'**elle est déplacée lors d'une rotation du disque de came (13).

7. Machine façonneuse de pâte (15) selon la revendication 6, **caractérisée en ce que** la bielle (11) est logée dans une rainure de guidage (32) réalisée sur le disque de came (13), de sorte qu'un déplacement radial de la bielle (11) puisse être prédéfini par une trajectoire incurvée de la rainure de guidage (32) du disque de came (13).

8. Machine façonneuse de pâte (15) selon l'une quelconque des revendications 1 à 6, **caractérisée en ce que** l'élément de fond à motif (5) est en liaison active avec le corps de base (2) par l'intermédiaire d'un ressort de rappel (14), le ressort de rappel (14) exerçant une force de ressort sur l'élément de fond à motif (5), laquelle agit en direction de la deuxième position en volume (9).

9. Procédé de fabrication d'une pâtisserie constituée de plusieurs sortes de pâte à l'aide d'une machine façonneuse de pâte (15) selon l'une quelconque des revendications 1 à 8, l'élément de fond à motif (5), dans une première étape (26), étant déplacé dans une première position en volume (8), une première pâte, dans une deuxième étape (27), étant placée dans l'évidement (4) à l'aide du premier dispositif d'alimentation en pâte (16), l'élément de fond à motif (5), dans une troisième étape (28), étant déplacé dans une deuxième position en volume (9), un volume de l'approfondissement (4) étant plus grand dans la deuxième position en volume (9) qu'un volume de l'approfondissement (4) dans la première position en volume (8), une deuxième pâte, dans une quatrième étape (29), étant placée dans l'approfondissement (4) sur la première pâte à l'aide du deuxième dispositif d'alimentation en pâte (20), un pâton de pâtisserie disposé dans l'approfondissement (4) en raison de l'apport de pâte étant retiré de l'approfondissement (4) dans une étape suivante de retrait (30), et le pâton de pâtisserie étant cuit dans une étape suivante de cuisson (31).

10. Procédé selon la revendication 9, **caractérisé en ce que** la troisième étape (28) et la quatrième étape (29) sont réalisées plusieurs fois, l'élément de fond à motif (5) étant respectivement déplacé dans une position en volume supplémentaire et le volume de l'approfondissement (4) étant respectivement agrandi et une pâte supplémentaire étant respectivement placée dans l'approfondissement (4) respectivement à l'aide d'un dispositif supplémentaire d'alimentation en pâte.
